# EUROPÄISCHE PATENTSCHRIFT

(11) **EP 0 443 104 B1**
(45) Veröffentlichungstag und Bekanntmachung des Hinweises auf die Patenterteilung: **09.03.1994**
(21) Anmeldenummer: 90121781.0
(22) Anmeldetag: 14.11.1990
(51) Int. Cl.: H01R 9/24, H01R 13/621, H02G 3/08

(54) **Anschlusseinheit für die Hausleittechnik**
Terminal module for local network
Module de connexion pour réseau local

(30) Priorität: 17.02.1990 DE 4005086
(43) Veröffentlichungstag der Anmeldung: 28.08.1991
(73) Patentinhaber: GEBRÜDER MERTEN GMBH & CO. KG, D-51643 Gummersbach (DE)
(72) Erfinder: Stefanski, Manfred, Dipl.-Ing., W-5270 Gummersbach (DE)
(74) Vertreter: Selting, Günther, Dipl.-Ing.

(56) Entgegenhaltungen:
- DE-U- 1 792 650
- DE-U- 7 932 309
- GB-A- 2 105 134
- GB-A- 2 190 253

## Beschreibung

Die Erfindung betrifft eine Anschlußeinheit der im Oberbegriff des Patentanspruchs 1 angegebenen Art.

Aus EP 0 344 609 A2 ist ein digitales Signalübertragungssystem für die Hausleittechnik bekannt, bei dem Datentelegramme zwischen verschiedenen im Gebäude installierten Anschlußeinheiten oder zwischen jeder Anschlußeinheit und einer Zentraleinheit übertragen werden können. Die Datenübertragung erfolgt zum Zwecke des Schaltens, Steuerns, Regelns, Messens und/oder Überwachens, wobei die Anschlußeinheiten die Funktionen von Eingabe- und/oder Ausgabeeinheiten haben können. An die Anschlußeinheiten können externe elektrische Geräte, Melder oder Funktionsgeber angeschlossen werden. Die Anschlußeinheit ermöglicht die Kommunikation des externen Gerätes mit dem Hausleitsystem. Da für unterschiedliche externe Geräte funktionsspezifische Anschlußeinheiten benötigt werden, ist zur Vereinheitlichung des in dem Gebäude zu installierenden Systems vorgesehen, daß jede Anschlußeinheit aus einer Busankopplungs-Einheit und einem Adapter besteht. Die Busankopplungs-Einheiten sind hardware-mäßig untereinander gleich aufgebaut, so daß bei der Installation des Systems an jeder Anschlußstelle zunächst nur eine Busankopplungs-Einheit, die einen Mikroprozessor enthält, zu installieren ist. Diese Busankopplungs-Einheit wird mit einem funktionsspezifischen Adapter verbunden, der die Anschlußeinheit komplettiert und ihr dasjenige Verhalten vermittelt, das für die Kommunikation mit einem bestimmten externen Gerätetyp erforderlich ist.

Die vorliegende Erfindung befaßt sich mit der konstruktiven Gestaltung der Anschlußeinheit aus Busankopplungs-Einheit und Adapter. Der Erfindung liegt die Aufgabe zugrunde, eine Anschlußeinheit der im Oberbegriff des Patentanspruchs 1 angegebenen Art zu schaffen, die einfach aufgebaut ist und die Anbringung des aus einer Reihe unterschiedlicher verfügbarer Adaptertypen ausgewählten Adapters ermöglicht und die insbesondere einfach zu montieren ist.

Die Lösung dieser Aufgabe erfolgt erfindungsgemäß mit den im Patentanspruch 1 angegebenen Merkmalen.

Die erfindungsgemäße Anschlußeinheit weist ein Basisteil auf, das separat auf einer Wand zu montieren ist und die Busankopplungs-Einheit trägt. An diesem Basisteil kann seitlich neben der Busankopplungs-Einheit der Adapter befestigt werden. Busankopplungs-Einheit und Adapter sind also nebeneinander angeordnet und ihre gegenseitige Verbindung erfolgt im Innern des Basisteils durch dort vorgesehene Verbindungsleitungen. Die Verbindungsleitungen sind Bestandteil des Basisteils. Die Busankopplungs-Einheit kann dagegen fest an dem Basisteil angebracht oder auch auswechselbar bzw. steckbar montiert sein. Bei fester Anbringung ist eine feste Verdrahtung der Busankopplungs-Einheit durch Löten oder auch durch Verschrauben der elektrischen Anschlüsse vorgesehen, während unter auswechselbarer oder lösbarer Anbringung bzgl. der elektrischen Kontaktgabe eine Steckverbindung zu verstehen ist. Eine solche Steckverbindung ist jedenfalls zwischen Basisteil und Adapter vorgesehen. Dies bedeutet, daß der Adapter lediglich auf das Basisteil aufgesteckt werden muß, um die elektrische Verbindung zwischen Adapter und den Verbindungsleitungen, und somit auch zur Busankopplungs-Einheit herzustellen. Die mechanische Befestigung kann anschließend noch durch zusätzliches Anschrauben des den Adapter enthaltenden Gehäuseteils erfolgen.

Die erfindungsgemäße Anschlußeinheit ist ein Aufputz-Gerät, das auf einer Wand montiert wird. Bei der Montage des Hausleitsystems in dem Gebäude werden zunächst nur die Basisteile installiert und jeweils mit dem zugehörigen Datenkabel verbunden. Erst vor Inbetriebnahme des Hausleitsystems werden die Adapter an den Basisteilen montiert. Je nach Funktion, die von der Anschlußeinheit ausgeführt werden soll, wird der betreffende Adaptertyp ausgewählt. Die Basisteile (und auch die Busankopplungs-Einheiten) sind dagegen für sämtliche Anschlußeinheiten gleich.

Die erfindungsgemäße Anschlußeinheit kann feuchtigkeits- und staubdicht ausgebildet sein, wobei sämtliche elektrischen Komponenten in dicht abschließenden Innenräumen untergebracht sind.

Die Busankopplungs-Einheit kann entweder in einem separaten Gehäuseteil untergebracht sein, das an dem Basisteil lösbar zu befestigen ist, sie kann aber auch fester Bestandteil des Basisteils sein. Die lösbare Befestigung der Busankopplungs-Einheit hat den Vorteil, daß im Falle eines Defekts auf einfache Weise eine Auswechslung vorgenommen werden kann. Dagegen muß der Adapter nicht nur in den seltenen Fällen eines Defekts ausgewechselt werden können. Da der Adapter ein funktionsspezifisches Teil ist, muß entsprechend der jeweiligen Funktion des externen Geräts ein bestimmter Adaptertyp eingesetzt werden. Wenn das externe Gerät andere oder zusätzliche Funktionen ausführen muß, ist aus diesem Grund eine Auswechslung des Adapters erforderlich.

Im folgenden werden unter Bezugnahme auf die Zeichnungen Ausführungsbeispiele der Erfindung näher erläutert.

Es zeigen:
- Fig. 1: eine Explosionsdarstellung einer ersten Ausführungsform der Anschlußeinheit,
- Fig. 2: eine Draufsicht auf das Basisteil von Fig. 1,
- Fig. 3: eine Explosionsdarstellung der Kabelverbinder mit den zugehörigen Steckverbindern im vergrößerten Maßstab,
- Fig. 4: die fertig montierte Anschlußeinheit,
- Fig. 5: einen Schnitt entlang der Linie V-V von Fig. 4,
- Fig. 6: einen Schnitt entlang der Linie VI-VI von Fig. 5, und
- Fig. 7: eine perspektivische Darstellung einer zweiten Ausführungsform.

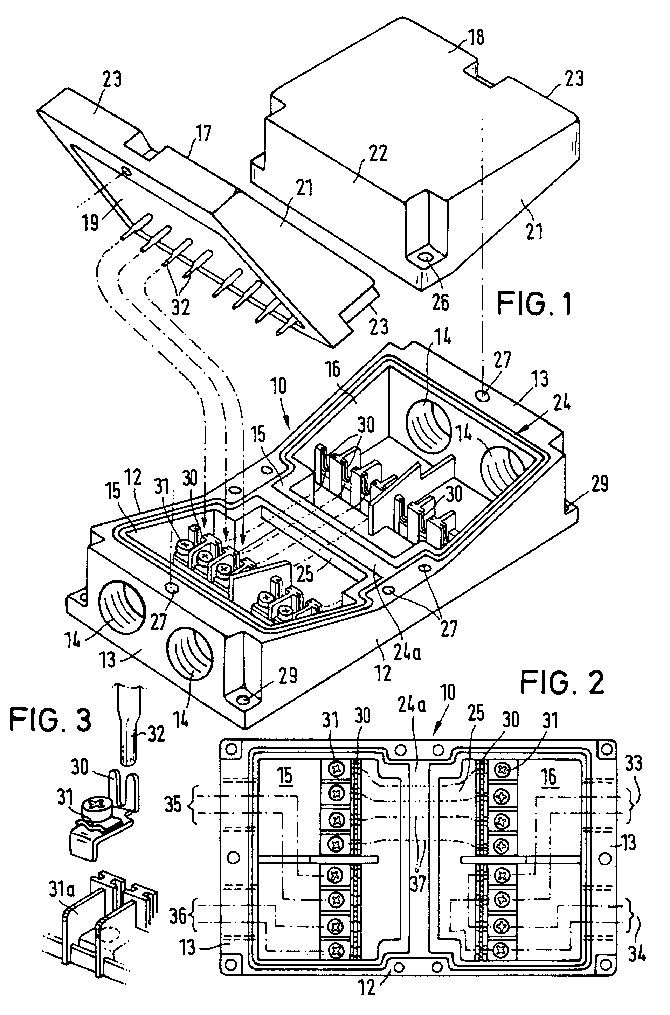

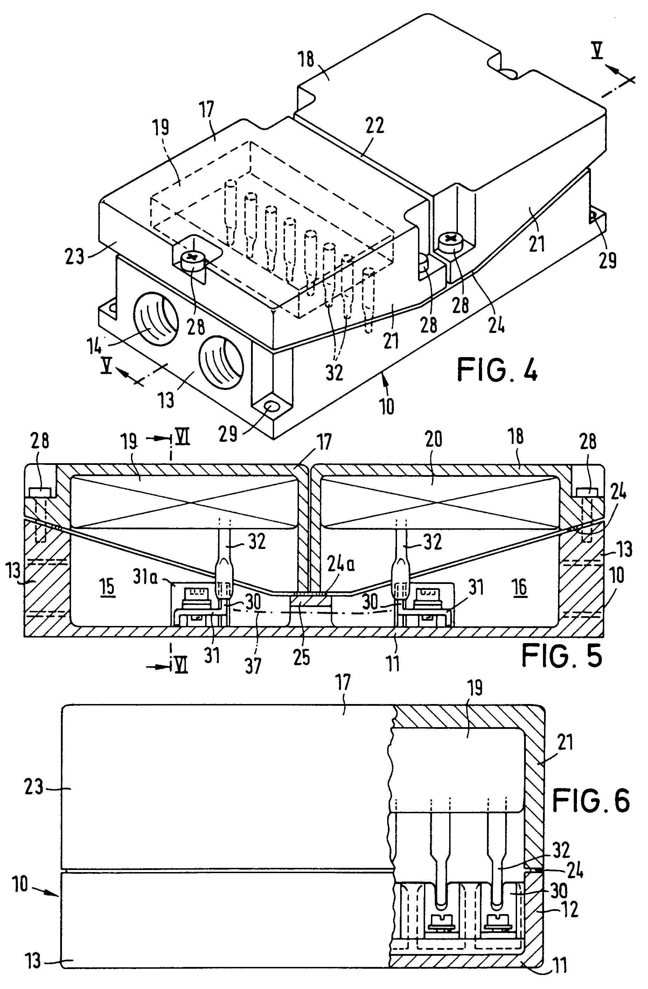

Die Anschlußeinheit der Fign. 1 bis 6 weist ein Basisteil 10 auf, das nach Art einer rechteckigen Wanne ausgebildet ist und eine geschlossene, d.h. öffnungsfreie, Bodenwand 11 sowie Seitenwände 12 und 13 aufweist. Die stirnseitigen Seitenwände 13 sind höher als die Seitenwände 12 und enthalten Kabeldurchtrittsöffnungen 14 mit Schraubgewinden zum Einsetzen abdichtender (nicht dargestellter) Schraubstopfen, die einen feuchtigkeitsdichten Kabeldurchtritt ermöglichen. Die Seitenwände 12 sind schräg und ihre Höhe verringert sich stetig zur Längsmitte des Basisteils 10 hin. In der Längsmitte des Basisteils 10 verläuft eine die Seitenwände 12 verbindende Zwischenwand 25, die das Innere des Basisteils in zwei voneinander getrennte Innenräume 15 und 16 unterteilt.

Die beiden Gehäuseteile 17 und 18 werden als Deckel auf das Basisteil 10 aufgesetzt, wobei das Gehäuseteil 17 den Innenraum 15 und das Gehäuseteil 18 den Innenraum 16 bedeckt und nach außen abschließt. Die Gehäuseteile 17 und 18 sind nach unten offen. Im Gehäuseteil 17 befindet sich der Adapter 19 und im Gehäuseteil 18 die Busankopplungs-Einheit 20 jeweils in einer Vergußmasse. Die Busankopplungs-Einheit 20 ist eine auf einer Leiterplatine untergebrachte elektrische Schaltung, die u.a. einen Mikroprozessor enthält und Datentelegramme mit anderen Anschlußeinheiten oder mit einer Zentraleinheit austauschen kann. Der Adapter 19 kann ebenfalls einen Mikroprozessor enthalten, jedoch kann er auch beispielsweise nur ein Relais oder einen elektronischen Schalter enthalten, wenn er für eine sehr einfache Funktion ausgebildet ist. Adapter 19 und Busankopplungs-Einheit 20 enthalten alle elektrischen Komponenten der Anschlußeinheit.

Die Gehäuseteile 17 und 18 sind generell untereinander gleich ausgebildet, jedoch sollten sie eine konstruktive Kennung aufweisen, mit der verhindert werden kann, daß eines der Gehäuseteile auf den falschen Innenraum aufgesetzt wird. Die Gehäuseteile 17 und 18 haben Seitenwände 21 mit schrägverlaufenden Unterkanten sowie unterschiedlich hohe Stirnwände 22 und 23, so daß sie, wenn sie als Deckel auf das Basisteil 10 aufgesetzt werden, zusammen mit dem Basisteil ein im wesentlichen rechteckiges Gehäuse bilden, dessen Länge etwa doppelt so groß ist wie seine Breite.

Auf der Oberseite der Seitenwände 12 und 13 des Basisteils 10 verläuft eine Dichtung 24, die die Innenräume 15 und 16 lückenlos umlaufend umschließt. Diese Dichtung 24 weist einen auf der Zwischenwand 25 aufliegenden Dichtstreifen 24a auf. Der Dichtstreifen 24a hat eine solche Breite, daß auf ihm die Unterkanten der hohen Stirnwände 22 beider Gehäuseteile 17 und 18 aufliegen können.

Durch miteinander fluchtende Bohrungen 26 in den Gehäuseteilen 17 und 18 sowie 27 im Basisteil 10 sind die Gehäuseteile mit Schrauben 28 am Basisteil 10 befestigt. Die mit Innengewinde versehenen Bohrungen 27 sind in Bereichen außerhalb der Dichtung 24 angeordnet.

Weitere Bohrungen 29 am Basisteil 10, die ebenfalls außerhalb des von der Dichtung 24 umschlossenen Bereichs liegen, dienen zur Befestigung des Basisteils an einer Wand.

Im Innenraum 15 sind klemmenförmige Steckverbinder 30 angeordnet, die vom Boden 11 aus aufragen und jeweils einstückig mit einem Kabelanschlußvorrichtung 31 verbunden sind (Fig. 3). Diese Steckverbinder sind in entsprechende, dem Boden 11 angeformte Aufnahmevorrichtungen 31a eingesetzt. Die weiblichen Steckverbinder 30 sind jeweils in einer Reihe angeordnet. An dem Adapter 19 und an der Busankopplungs-Einheit 20 sind aus dem jeweiligen Gehäuseteil 17 bzw. 18 herausragende männliche Steckverbinder 32 in Form abgeflachter Stifte vorgesehen, die ebenfalls in einer Reihe angeordnet sind und die beim Aufsetzen des jeweiligen Gehäuseteils 17,18 auf das Basisteil 10 mit den Steckverbindern 30 in Kontakt kommen.

Durch die in den Innenraum 16 hineinführenden Kabeldurchtrittsöffnungen 14 führen gemäß Fig. 1 zwei Datenkabel 33 und 34 hindurch, die mit ihren Adern an Kabelanschlußvorrichtungen 31 angeschlossen sind. Das Datenkabel 33 dient für die Kommunikation der Busankopplungs-Einheit 20 mit anderen Anschlußeinheiten oder einer Zentraleinheit. Die Adern des Kabels 34 sind durch interne Verbindungen zwischen den Kabelanschlußvorrichtungen 30 mit den Adern des Datenkabels 33 verbunden. Das Datenkabel 34 dient zum Anschluß einer anderen Anschlußeinheit bzw. zur Weiterführung des Datenkabels 33.

In den adapterseitigen Innenraum 15 führen zwei Kabel 35 und 36 hinein. Das Kabel 35 dient zum Anschluß eines externen Geräts, z.B. einer Leuchte, eines Melders, Thermostaten u.dgl., und das Kabel 36 ist ein Versorgungskabel.

Durch Anstecken der Gehäuseteile 17 und 18 an das Basisteil 10 werden die Verbindungen zwischen den Datenkabeln 33,34 und der Busankopplungs-Einheit 20 sowie die Verbindungen zwischen den Kabeln 35,36 und dem Adapter 19 hergestellt. Damit der Adapter 19 und die Busankopplungs-Einheit 20 miteinander kommunizieren können, sind einige Steckverbinder 30 des Innenraums 15 mit entsprechenden Steckverbindern 30 des Innenraums 16 durch Verbindungsleitungen 37 verbunden.

Bei der Installation der Anschlußeinheit in einem Hausleitsystem wird das Basisteil 10 an einer Wand befestigt und die Datenleitungen 33 und 34 werden an die betreffenden Kabelverbinder 31 des Innenraums 16 angeschlossen. Dann kann das Gehäuseteil 18 aufgesetzt und damit der Innenraum 16 hermetisch verschlossen werden. Der andere Innenraum 15 kann zunächst provisorisch mit einem leeren Gehäuseteil abgedeckt werden. An die Kabelanschlußvorrichtungen 31 des Innenraums 15 werden die Kabel 35 und 36 angeschlossen. Vor Inbetriebnahme des Hausleitsystems wird ein Gehäuseteil 17, das einen entsprechenden Adaptertyp enthält, über dem Innenraum 15 auf das Basisteil aufgesetzt und verschraubt. Die Anschlußeinheit ist dann komplettiert und betriebsfähig.

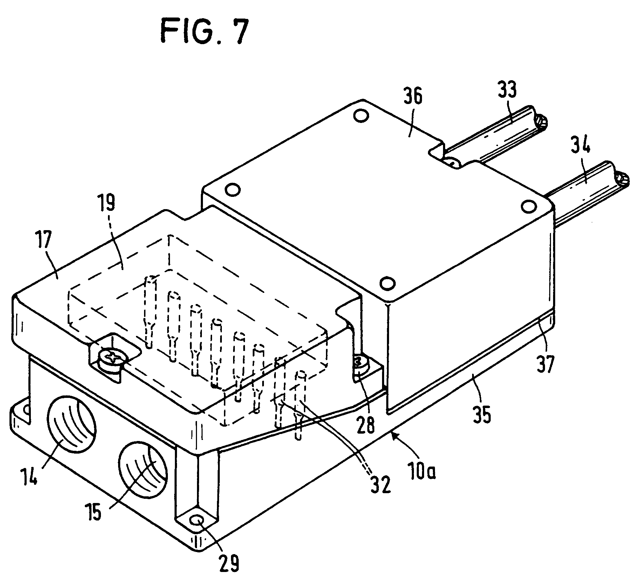

Bei dem Ausführungsbeispiel von Fig. 7 ist auf dem Basisteil 10a nur das den Adapter 19 mit den Steckverbindern 32 enthaltende Gehäuseteil 17 vorgesehen. Die Busankopplungs-Einheit ist im Basisteil 10a fest untergebracht. Der betreffende Teil des Basisteils 10a ist als Platte 35 ausgebildet, auf der die Busankopplungs-Einheit angebracht ist und die mit einer Haube 36 bedeckt ist. Diese Haube 36 kann für den Anschluß der Datenkabel 33,34 abgenommen werden. Der Spalt zwischen der Platte 35 und der Haube 36 ist mit einer separaten Dichtung 37 abgedichtet. Im übrigen entspricht das Ausführungsbeispiel von Fig. 7 dem ersten Ausführungsbeispiel, d.h. im Basisteil 10a verlaufen Verbindungsleitungen 37, die die Busankopplungs-Einheit mit den Steckverbindern 30 verbinden, welche mit den Steckverbindern 32 im Innenraum 15 zusammengreifen. Die Busankopplungs-Einheit ist jedoch nicht über Steckverbinder mit den internen Verbindungsleitungen verbunden.

## Patentansprüche

1. Anschlußeinheit für die Hausleittechnik, mit einer mit einem Datenkabel (33) verbindbaren Busankopplungs-Einheit (20), die einen Mikroprozessor enthält, und einem funktionsspezifischen Adapter (19), der in einem Gehäuseteil (17) untergebracht und mit der Busankopplungs-Einheit verbindbar ist, **dadurch gekennzeichnet,** daß ein auf einer Wand zu befestigendes Basisteil (10) vorgesehen ist, welches die Busankopplungs-Einheit (20) trägt und auf dem das den Adapter (19) enthaltende Gehäuse (17) lösbar befestigt ist, daß das Basisteil (10) Steckverbinder (30) zum Zusammenstecken mit Steckverbindern (32) des Adapters (19) aufweist und daß in dem Basisteil (10) Verbindungsleitungen (37) von den Steckverbindern (30) des Basisteils zu der Busankopplungs-Einheit (20) verlaufen.

2. Anschlußeinheit nach Anspruch 1, dadurch gekennzeichnet, daß das Basisteil (10) mindestens eine Seitenwand (13) aufweist, die höher ist als die übrigen Seitenwände (12), und daß diese Seitenwand Kabeldurchtrittsöffnungen (14) enthält.

3. Anschlußeinheit nach Anspruch 1 oder 2, dadurch gekennzeichnet, daß das Basisteil (10) einen von Seitenwänden (12,13) und einer Zwischenwand (25) begrenzten, durch das Gehäuseteil (17) des Adapters (19) abdichtend verschließbaren Innenraum (15) aufweist, dessen Öffnung von einer umlaufenden Dichtung (24,24a) begrenzt ist.

4. Anschlußeinheit nach einem der Ansprüche 1 bis 3, dadurch gekennzeichnet, daß die Busankopplungs-Einheit (20) in einem zweiten Gehäuseteil (18) untergebracht ist, das lösbar auf dem Basisteil (10) befestigt ist, wobei das Basisteil Steckverbinder (30) zum Zusammenstecken mit Steckverbindern (32) der Busankopplungs-Einheit (20) aufweist, und daß die Verbindungsleitungen (37) die Steckverbinder (30) der Busankopplungs-Einheit (20) und des Basisteils (10) untereinander verbinden.

5. Anschlußeinheit nach einem der Ansprüche 1 bis 4, dadurch gekennzeichnet, daß das Basisteil (10) einen von Seitenwänden (12,13) und einer Zwischenwand (25) begrenzten, durch das Gehäuseteil (18) der Busankopplungs-Einheit (20) abdichtend verschließbaren Innenraum (16) aufweist, dessen Öffnung von einer umlaufenden Dichtung (24,24a) begrenzt ist.

6. Anschlußeinheit nach einem der Ansprüche 1 bis 3, dadurch gekennzeichnet, daß die Busankopplungs-Einheit auf dem Basisteil (10a) angebracht und mit einer abnehmbaren Schutzhaube (36) abdichtend bedeckt ist.

7. Anschlußeinheit nach einem der Ansprüche 1 bis 6, dadurch gekennzeichnet, daß der Adapter (19) und/oder die Busankopplungs-Einheit (20) in einer Vergußmasse gekapselt untergebracht ist.

8. Anschlußeinheit nach einem der Ansprüche 3 bis 7, dadurch gekennzeichnet, daß das Basisteil (10) einen lochfreien geschlossenen Boden (11) aufweist und daß Befestigungslöcher (29) außerhalb des von der Dichtung (24,24a) umschlossenen Bereichs an dem Basisteil vorgesehen sind.

## Claims

1. A connecting unit for home wiring technic comprising a bus coupling unit (20) connectable with a data cable (33) and including a microprocessor, and a function specific adapter (19) housed in a housing member (17) and connectable with said bus coupling unit,
characterised in
that a base member (10) to be mounted on a wall is provided which supports said bus coupling unit (20) and on which said housing (17) containing said adapter (19) is removably fixed, that said base member (10) has connectors (30) for plugging with connectors (32) of said adapter (19), and that connecting lines (37) extend in said base member (10) from said connectors (30) of said base member to said bus coupling member (20).

2. The connecting unit of claim 1, characterised in that said base member (10) has at least one side wall (13) that is higher than the other side walls (12) and that this side walls has cable passage openings (14).

3. The connecting unit of claim 1 or 2, characterised in that said base member (10) has an interior space (15) defined by said side walls (12, 13) and an intermediate wall (25) and adapted to be closed in a sealing manner by said housing member (17) of said adapter (19), the opening of said interior space being defined by a circumferential seal (24, 24a).

4. The connecting unit of one of claims 1 to 3, characterised in that said bus coupling unit (20) is housed in a second housing member (18) fastened removably on said base member (10), said base member having connectors (30) for plugging with connectors (32) of said bus coupling unit (20), and that said connecting lines (37) interconnect said connectors (30) of said bus coupling unit (20) and said base member (10).

5. The connecting unit of one of claims 1 to 4, characterised in that said base member (10) has an interior space (16) defined by side walls (12, 13) and an intermediate wall (25) and adapted to be closed in a sealing manner by said housing member (18) of said bus coupling unit (20), the opening of said interior space being defined by a circumferential seal (24, 24a).

6. The connecting unit of one of claims 1 to 3, characterised in that said bus coupling unit (20) is provided on said base member (10a) and is covered in a sealing manner by a removable protective lid (36).

7. The connecting unit of one of claims 1 to 6, characterised in that said adapter (19) and/or said bus coupling unit (20) are disposed encapsulated in a casting compound.

8. The connecting unit of one of claims 3 to 7, characterised in that said base member (10) has a closed bottom (11) free of holes and that mounting holes (29) are provided at said base member outside the area enclosed by said seal (24, 24a).

## Revendications

1. Unité de raccordement pour la technique de contrôle domestique, comprenant une unité de couplage collectrice (20) pouvant être reliée à un câble de données (33) et contenant un micro-processeur, et un adaptateur (19) spécifique de fonctions placé dans une partie de boîtier (17) et pouvant être relié à l'unité de couplage collectrice, caractérisée en ce qu'il est prévu une partie d'embase (10), à fixer sur un mur, qui porte l'unité de couplage collectrice (20) et sur laquelle est fixé, de manière amovible, le boîtier (17) contenant l'adaptateur, que la partie d'embase (10) présente des connecteurs enfichables (30) destinés à coopérer avec des connecteurs enfichables (32) de l'adaptateur (19), et que dans la partie d'embase (10) s'étendent des lignes de raccordement (37) allant des connecteurs enfichables (30) de la partie d'embase à l'unité de couplage collectrice (20).

2. Unité de raccordement suivant la revendication 1, caractérisée en ce que la partie d'embase (10) présente au moins une paroi latérale (13) qui est plus haute que les autres parois latérales (12) et que cette paroi latérale contient des ouvertures de passage de câble (14).

3. Unité de raccordement suivant la revendication 1 ou 2, caractérisée en ce que la partie d'embase (10) présente un emplacement intérieur (15), délimité par des parois latérales (12, 13) et une paroi intermédiaire (25) et pouvant être fermé hermétiquement par la partie de boîtier (17) de l'adaptateur (19), dont l'ouverture est limitée par un joint périphérique (24, 24a).

4. Unité de raccordement suivant l'une des revendications 1 à 3, caractérisée en ce que l'unité de couplage collectrice (20) est placée dans une seconde partie de boîtier (18) qui est fixée, de manière amovible, sur la partie d'embase (10), la partie d'embase présentant des connecteurs enfichables (30) destinés à coopérer avec des connecteurs enfichables (32) de l'unité de couplage collectrice (20), et que les lignes de raccordement (37) relient entre eux les connecteurs enfichables (30) de l'unité de couplage collectrice (20) et de la partie d'embase (10).

5. Unité de raccordement suivant l'une des revendications 1 à 4, caractérisée en ce que la partie d'embase (10) présente un emplacement intérieur (16), délimité par des parois latérales (12, 13) et une paroi intermédiaire (25) et pouvant être fermé hermétiquement par la partie de boîtier (18) de l'unité de couplage collectrice (20), dont l'ouverture est limitée par un joint périphérique (24, 24a).

6. Unité de raccordement suivant l'une des revendications 1 à 3, caractérisée en ce que l'unité de couplage collectrice est placée sur la partie d'embase (10a) et recouverte de manière étanche par un couvercle de protection (36) amovible.

7. Unité de raccordement suivant l'une des revendications 1 à 6, caractérisée en ce que l'adaptateur (19) et/ou l'unité de couplage collectrice (20) sont placés encapsulés dans une masse de moulage.

8. Unité de raccordement suivant l'une des revendications 3 à 7, caractérisée en ce que la partie d'embase (10) présente un fond (11) fermé, sans trous, et que des trous de fixation (29) sont prévus dans la partie d'embase, au dehors de la zone entourée par le joint (24, 24a).
